# EUROPÄISCHE PATENTSCHRIFT

(11) **EP 2 228 298 B1**
(45) Veröffentlichungstag und Bekanntmachung des Hinweises auf die Patenterteilung: **20.06.2012**
(21) Anmeldenummer: 10155899.7
(22) Anmeldetag: 09.03.2010
(51) Int. Cl.: B64C 1/20

(54) **Bodenmodul mit einer Befestigungseinrichtung**
Floor module with an attachment device
Module de plancher avec un dispositif de fixation

(30) Priorität: 10.03.2009 DE 102009012428
(43) Veröffentlichungstag der Anmeldung: 15.09.2010
(73) Patentinhaber: Telair International GmbH, 83714 Miesbach (DE)
(72) Erfinder: Huber, Thomas, 83727, Schliersee (DE); Holzner, Richard, 83071, Stephanskirchen (DE)
(74) Vertreter: Bohnenberger, Johannes

(56) Entgegenhaltungen:
- EP-B1- 1 646 557
- EP-B1- 1 646 558

## Beschreibung

Die Erfindung betrifft ein Bodenmodul mit einer Befestigungseinrichtung zum Befestigen in einem Flugzeugrumpf.

Aus der EP 1 646 556 B1 und der EP 1 646 557 B1 ist ein Frachtdeck zur Aufnahme von Ladung im Frachtraum eines Flugzeugs bekannt, das aus Modulen aufgebaut ist, welche außerhalb des Flugzeugrumpfes montiert und in einem zum großen Teil fertig montierten Zustand in das Flugzeug eingebaut werden können. Wenn der Verwendungszweck des Flugzeugs geändert werden soll, so können die Bodenmodule wieder ausgebaut und durch anders ausgestattete Bodenmodule oder auch durch Funktionseinheiten (z.B. ein Küchenmodul oder ein Toilettenmodul) ersetzt werden. Der Ein- und Ausbau soll möglichst einfach durchführbar sein.

Der Erfindung liegt die Aufgabe zu Grunde, ein Bodenmodul mit einer Befestigungseinrichtung zum Befestigen in einem Flugzeugrumpf aufzuzeigen, die einen leichten Ein- und Ausbau eines Bodenmoduls sicherstellt.

Diese Aufgabe wird durch ein Bodenmodul nach Anspruch 1 gelöst.

Insbesondere wird die Aufgabe durch ein Bodenmodul mit einer Befestigungseinrichtung zum Befestigen in einem Flugzeugrumpf gelöst, umfassend ein Zwischenelement, das einerseits mit Verbindungseinrichtungen am Flugzeugrumpf befestigbar ist und das andererseits eine Aufnahmeeinrichtung für einen Halteabschnitt des Bodenmoduls umfasst und das derart ausgebildet ist, dass eine Beweglichkeit des Halteabschnitts relativ zum Flugzeugrumpf in dessen Längsrichtung gewährleistet ist.

Durch diese Beweglichkeit wird nicht nur ein erleichterter Ein- und Ausbau gewährleistet, es konnte überraschender Weise auch festgestellt werden, dass durch diese Beweglichkeit in der Flugzeuglängsrichtung verminderte Spannungen bei Verformung des Flugzeugrumpfes aufgrund von Lastwechseln auftreten.

Die Verbindungseinrichtung wird mit dem Flugzeugrumpf vorzugsweise spielfrei verbunden. Dadurch ist gewährleistet, dass kein Reibungsverschleiß am Flugzeugrumpf auftreten kann.

Vorzugsweise wird die Verbindungseinrichtung an einem Spant des Flugzeugrumpfes angebracht, wodurch eine besonders hohe Tragkraft gewährleistet wird. Hierfür umfasst die Verbindungseinrichtung vorzugsweise einen einseitigen Flansch, der auf dem Spant aufliegt, wodurch die genannte Spielfreiheit in einfacher Weise auch bei gewissen Toleranzen der Maße des Spants gewährleistet wird.

Die Aufnahmeeinrichtung umfasst vorzugsweise einen Gabelabschnitt, zwischen dessen Schenkeln der Halteabschnitt mit Spiel (in Längsrichtung des Flugzeugs) aufnehmbar ist. Die Beweglichkeit wird also an einer definierten Stelle der Befestigungseinrichtung gewährleistet, so dass etwa auftretende Verschleißerscheinungen leicht prüfbar sind. Die Befestigung zwischen Aufnahmeeinrichtung und Gabelabschnitt erfolgt vorzugsweise durch einen Bolzen, der den Halteabschnitt durchsetzt und in den Schenkeln befestigt ist. Hierdurch ist eine einfache Montage gewährleistet.

Ein Ausführungsbeispiel der Erfindung wird nachfolgend anhand von Abbildungen näher erläutert. Hierbei zeigen
- Fig. 1 eine perspektivische Darstellung eines Abschnittes eines Flugzeugrumpfes mit einem eingebauten und einem ausgebauten Bodenmodul,
- Fig. 2 eine Draufsicht (in Längsrichtung des Flugzeugs) auf einen Abschnitt des Flugzeugrumpfes mit eingebautem Bodenmodul,
- Fig. 3 eine vergrößerte Detaildarstellung des Bereiches III aus Fig. 2 und
- Fig. 4 eine Schnittdarstellung entlang der Linie IV-IV aus Fig. 3.

In der nachfolgenden Beschreibung werden für gleiche und gleich wirkende Teile dieselben Bezugsziffern verwendet.

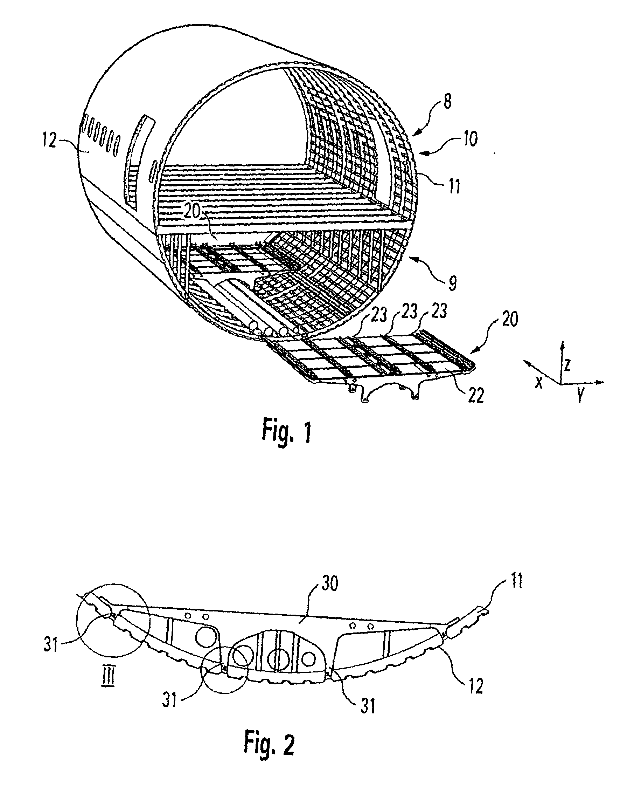

Aus Fig. 1 geht hervor, dass der Innenraum eines Flugzeugrumpfes 10 in einen oberen Abschnitt 8 und einen unteren Abschnitt 9 unterteilt ist. Im unteren Abschnitt 9 befindet sich der hier angesprochene Frachtraum, in welchem Bodenmodule 20 befestigt werden können. Diese umfassen Bodenpaneele 22 und Rollenbahnen 23, welche eine begehbare Fläche bilden. Die Bodenpaneele 22 und die Rollenbahnen 23 sind an Querträgern 30 befestigt, welche mit Halteabschnitten 31 an Spanten 11 einer Außenhaut 12 des Flugzeugrumpfes 10 befestigt werden, wie dies besonders in Fig. 2 gezeigt ist. In der Abbildung ist die Längsrichtung des Flugzeugrumpfes 10 mit x, die Querrichtung mit y und die Vertikalrichtung mit z bezeichnet.

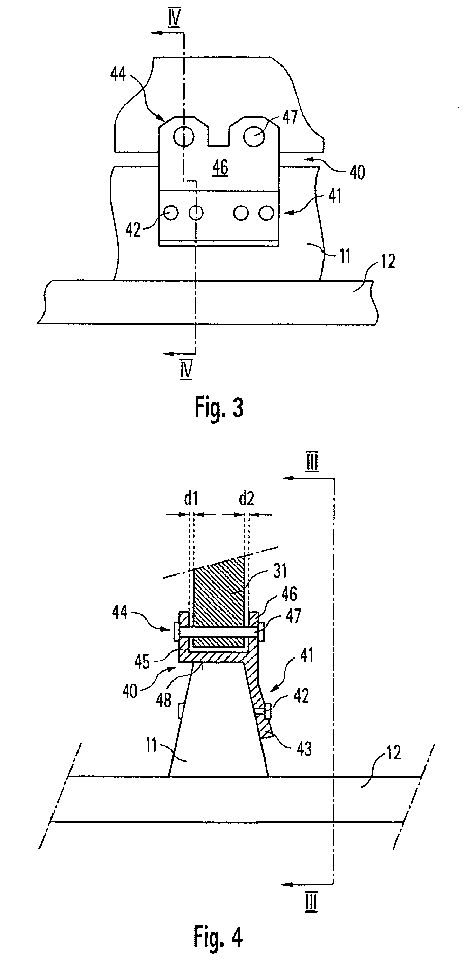

In den Fig. 3 und 4 ist ein Zwischenelement 40 detailliert dargestellt, welches die Halteabschnitte 31 der Querträger 30 mit dem Flugzeugrumpf 10 verbindet.

Dieses Zwischenelement 40 umfasst einerseits eine Verbindungseinrichtung 41 zum Verbinden des Zwischenelements 40 mit dem Flugzeugrumpf bzw. dem Spant 11. Diese Verbindungseinrichtung 41 ist im Wesentlichen L-förmig ausgebildet und umfasst einerseits einen einseitigen Flansch 43, der sich dem Profil des Spants 11 entsprechend erstreckt. Andererseits ist ein Auflagerabschnitt 48 vorgesehen, mit welchem die Verbindungseinrichtung 41 auf dem Spant 11 aufliegt, um senkrecht auf den Rumpf 10 bzw. die Außenhaut 12 wirkende Lasten abzuleiten.

Die Verbindungseinrichtung 41 ist einstückig mit einer Aufnahmeeinrichtung 44 verbunden, welche im Querschnitt U-förmig ausgebildet ist und Schenkel 45, 46 aufweist. Zwischen diese Schenkel ist der Halteabschnitt 31 des Querträgers 30 derart einsetzbar, dass zwischen dem Halteabschnitt 31 und den Schenkeln 45, 46 Spiel (d₁, d₂) verbleibt. Zur Befestigung dienen lösbare Bolzen 47, welche die Schenkel 45, 46 und den Halteabschnitt 31 durchsetzen. Hierbei ist eine gewisse Gleitverschieblichkeit des Bolzens 47 innerhalb des Halteabschnittes 31 gewährleistet, so dass bei Bewegungen des Rumpfes in x-Richtung keine Spannungen auftreten können.

### Bezugszeichenliste

- 8: oberer Abschnitt
- 9: unterer Abschnitt
- 10: Flugzeugrumpf
- 11: Spanten
- 12: Außenhaut
- 20: Bodenmodule
- 22: Bodenpaneele
- 23: Rollenbahnen
- 30: Querträger
- 31: Halteabschnitt
- 40: Zwischenelement
- 41: Verbindungseinrichtung
- 42: Bolzen
- 43: Flansch
- 44: Aufnahmeeinrichtung
- 45: Schenkel
- 46: Schenkel
- 47: Bolzen
- 48: Auflagerabschnitt

## Patentansprüche

1. Bodenmodul mit einer Befestigungseinrichtung zum Befestigen in einem Flugzeugrumpf (10), umfassend
ein Zwischenelement (40), das einerseits mit einer Verbindungseinrichtung (41) am Flugzeugrumpf (10) befestigbar ist und das andererseits eine Aufnahmeeinrichtung (44) für einen Halteabschnitt (31) des Bodenmoduls (20) umfasst, und das derart ausgebildet ist, dass eine Beweglichkeit des Halteabschnitts (31) relativ zum Flugzeugrumpf (10) in dessen Längsrichtung (x) gewährleistet ist.

2. Bodenmodul nach Anspruch 1,
**dadurch gekennzeichnet, dass**
die Verbindungseinrichtung (41) mit dem Flugzeugrumpf (10) spielfrei verbindbar ist.

3. Bodenmodul nach einem der vorhergehenden Ansprüche,
**dadurch gekennzeichnet, dass**
die Verbindungseinrichtung (41) an einem Spant (11) des Flugzeugrumpfes (10) anbringbar ist.

4. Bodenmodul nach einem der vorhergehenden Ansprüche,
**dadurch gekennzeichnet, dass**
die Verbindungseinrichtung (41) einen einseitigen Flansch (43) umfasst, der auf einem Spant (11) des Flugzeugrumpfes (10) aufliegt.

5. Bodenmodul nach einem der vorhergehenden Ansprüche,
**dadurch gekennzeichnet, dass**
die Aufnahmeeinrichtung (44) einen Gabelabschnitt umfasst, zwischen dessen Schenkeln (45, 46) der Halteabschnitt (31) mit Spiel (d₁, d₂) aufnehmbar ist.

6. Bodenmodul nach einem der vorhergehenden Ansprüche, insbesondere nach Anspruch 5,
**dadurch gekennzeichnet, dass**
zwischen den Schenkeln (45, 46) mindestens ein, den Halteabschnitt (31) durchsetzender Bolzen (41) einsetzbar ist, wobei der Halteabschnitt (31) gegenüber dem Bolzen (41) verschiebbar ist.

## Claims

1. Floor module with an attachment device for attaching in an aircraft fuselage (10), comprising an intermediate element (40) which can be attached at one end to the aircraft fuselage (10) by a connecting device (41) and which at the other end comprises a receiving device (44) for a retaining section (31) of the floor module (20) and which is designed in such a manner that moveability of the retaining section (31) relative to the aircraft fuselage (10) in the longitudinal direction (x) thereof is ensured.

2. Floor module according to Claim 1, **characterized in that** the connecting device (41) can be connected to the aircraft fuselage (10) in a manner free from play.

3. Floor module according to one of the preceding claims, **characterized in that** the connecting device (41) can be fixed to a frame (11) of the aircraft fuselage (10).

4. Floor module according to one of the preceding claims, **characterized in that** the connecting device (41) comprises a flange (43) on one side, the flange resting on a frame (11) of the aircraft fuselage (10).

5. Floor module according to one of the preceding claims, **characterized in that** the receiving device (44) comprises a forked section, between the limbs (45, 46) of which the retaining section (31) can be received with play (d₁, d₂).

6. Floor module according to one of the preceding claims, in particular according to Claim 5, **characterized in that** at least one bolt (41) passing through the retaining section (31) can be inserted between the limbs (45, 46), the retaining section (31) being displaceable in relation to the bolt (41).

## Revendications

1. Module de plancher comprenant un dispositif de fixation pour la fixation dans un fuselage d'avion (10), comprenant un élément intermédiaire (40), qui peut d'une part être fixé à un dispositif de connexion (41) sur le fuselage de l'avion (10), et qui d'autre part comprend un dispositif de réception (44) pour une portion de retenue (31) du module de plancher (20), et qui est réalisé de telle sorte qu'une mobilité de la portion de retenue (31) par rapport au fuselage de l'avion (10) dans sa direction longitudinale (x) soit garantie.

2. Module de plancher selon la revendication 1,
**caractérisé en ce que**
le dispositif de connexion (41) peut être connecté sans jeu au fuselage de l'avion (10).

3. Module de plancher selon l'une quelconque des revendications précédentes,
**caractérisé en ce que**
le dispositif de connexion (41) peut être monté sur un couple (11) du fuselage de l'avion (10).

4. Module de plancher selon l'une quelconque des revendications précédentes,
**caractérisé en ce que**
le dispositif de connexion (41) comprend une bride (43) d'un côté, qui repose sur le couple (11) du fuselage de l'avion (10).

5. Module de plancher selon l'une quelconque des revendications précédentes,
**caractérisé en ce que**
le dispositif de réception (44) comprend une portion de fourche entre les branches (45, 46) de laquelle peut être reçue, avec jeu (d₁, d₂), la portion de retenue (31).

6. Module de plancher selon l'une quelconque des revendications précédentes, en particulier selon la revendication 5,
**caractérisé en ce**
**qu'**au moins un boulon (41) traversant la portion de retenue (31) peut être inséré entre les branches (45, 46), la portion de retenue (31) pouvant être déplacée par rapport au boulon (41).
